# EUROPÄISCHE PATENTSCHRIFT

(11) **EP 1 361 132 B1**
(45) Veröffentlichungstag und Bekanntmachung des Hinweises auf die Patenterteilung: **27.07.2005**
(21) Anmeldenummer: 03010298.2
(22) Anmeldetag: 07.05.2003
(51) Int. Cl.: B60T 17/04, B60T 17/02, B60T 11/32, B60T 13/68

(54) **Druckluftverteilungseinrichtung für Kfz-Druckluftanlagen**
Compressed air distributing device for a pneumatic installation for a car
Dispositif de distribution d'air comprimé pour un système pneumatique pour automobile

(30) Priorität: 10.05.2002 DE 10220791
(43) Veröffentlichungstag der Anmeldung: 12.11.2003
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- DE-A- 3 603 742
- DE-A- 19 854 205
- DE-C- 19 710 814

## Beschreibung

Die Erfindung bezieht sich auf eine Druckluftverteilungseinrichtung für Kfz-Druckluftanlagen mit den im Oberbegriff des Anspruches 1 angegebenen Merkmalen. Solche Druckluftverteilungseinrichtungen weisen mindestens ein Mehrkreisschutzventil auf. Es kann sich aber auch um Druckluftaufbereitungseinrichtungen handeln, die in aller Regel neben einem Mehrkreisschutzventil zusätzlich einen Druckregler und einen Lufttrockner aufweisen. Je nach Ausführungsform sind diese Teile zu einer gemeinsamen Baueinheit zusammengefügt. Eine solche gemeinsame Baueinheit kann beispielsweise als Druckluftaufbereitungseinrichtung dem Kompressor einer Druckluftbeschaffungseinrichtung nachgeschaltet sein.

Eine Druckluftverteilungseinrichtung in der Ausbildung als Druckluftaufbereitungseinrichtung der eingangs beschriebenen Art ist aus der DE 195 44 621 C1 bekannt. In einem gemeinsamen Gehäuse, welches auch unterteilt ausgebildet sein kann, ist ein Druckregler und ein Lufttrockner mit ihren entsprechenden Elementen untergebracht. Das Mehrkreisschutzventil ist für mehrere Kreise ausgebildet und angeordnet, die von dem Gehäuse abzweigen. Jeder Kreis besitzt ein Überströmventil mit begrenzter Rückströmung. Zu diesem Zweck weist jedes Überströmventil eine bewegliche Wand auf, die auf einer Feder abgestützt ist. Auf der anderen Seite ist eine Wirkfläche vorgesehen, die anströmseitig von einem Anströmraum beaufschlagt wird, der in dauernder Verbindung zu einer Zentralbohrung für die Verteilung der ankommenden Druckluft steht. Die bewegliche Wand des Überströmventils mit begrenzter Rückströmung weist anströmseitig zwei Wirkflächen auf, nämlich die eine bereits beschriebene Wirkfläche und die andere Wirkfläche, die in geöffnetem Zustand hinzutritt bzw. ebenfalls beaufschlagt wird. Die bewegliche Wand ist auf einer Feder abgestützt, die von einem Federraum umgeben wird. Zwischen Anströmraum und Federraum ist eine Umgehungsleitung vorgesehen, in der ein Magnetventil mit eigenem Entlüftungsanschluss angeordnet ist. Dieses Magnetventil ist in stromlosem Zustand geschlossen, so dass der Federraum des Überströmventils an die Atmosphäre angeschlossen ist. Wenn das Magnetventil angesteuert wird, schaltet es in seine andere Stellung um, d. h. der Entlüftungsanschluss wird abgesperrt und der Federraum wird mit dem Anströmraum verbunden, so dass damit zusätzlich zu der von der Feder aufgebrachten Kraft eine Zusatz- oder Hilfskraft entsteht, die bestrebt ist, das Überströmventil zu schließen bzw. geschlossen zu halten. Damit bekommt das Überströmventil Mehrfachfunktion. Es funktioniert bei Anschluss des Rückraumes an die Atmosphäre in üblicher Weise, d. h. erbringt die vorteilhaften Funktionen eines Überströmventils mit begrenzter Rückströmung. Wird dagegen der Rückraum mit dem gleichen Druck versorgt wie der Ansteuerraum auf der anderen Seite der beweglichen Wand, dann sorgt die Kraft der Feder im Rückraum dafür, dass das Überströmventil geschlossen wird, also gleichsam als Absperrventil in Funktion tritt. Damit ist es möglich, den betreffenden Kreis, insbesondere im Defektfall, gezielt abzusperren. Dies kommt dann wiederum den anderen, nicht-abgesperrten Kreisen zugute, d. h. ein Notbetrieb kann auch im Störungsfall für diese anderen Kreise aufrecht erhalten werden. Weiterhin kann auf diese Weise das Mehrkreisschutzventil bzw. das jeweilige Überströmventil auch zum Zwecke einer Druckbegrenzung genutzt werden. Nachteilig dagegen ist, dass das Überströmventil mit begrenzter Rückströmung vor Erreichen seines Öffnungsdruckes nicht geöffnet werden kann. Ein weiterer wesentlicher Nachteil der bekannten Druckluftaufbereitungseinrichtung besteht darin, dass bei Verwendung unterschiedlicher Drücke in den einzelnen Kreisen und Benutzung eines Überströmventils als Druckbegrenzer dieser Kreis mit dem begrenzten Druck bei Ausfall der elektrischen Versorgung oder Abschaltung der Zündung des Fahrzeuges einen erhöhten Druck bekommt, der gesetzlich nicht zugelassen ist. Ein weiterer Nachteil besteht darin, dass das Überströmventil mit begrenzter Rückströmung unterhalb seines Öffnungsdruckes willkürlich, d. h. bei Bedarf oder zur Erreichung einer besonderen Funktion, nicht geöffnet werden kann.

Eine weitere ganz ähnliche Druckluftaufbereitungseinrichtung ist aus der DE 197 00 243 C1 bekannt. Auch hierbei ist die über das Magnetventil direkt beaufschlagbare Wirkfläche auf der dem Anströmraum abgekehrten Seite der beweglichen Wand und damit auf der Seite der Feder angeordnet. Für nachrangige Kreise wird ein gesondertes Druckbegrenzungsventil eingesetzt, welches dem jeweiligen Überströmventil des betreffenden Kreises nachgeschaltet ist. In diesem Falle wird das Überströmventil nur mit seiner normalen pneumatischen Funktion benutzt und es ist das Druckbegrenzungsventil, welches über das Magnetventil zusätzlich beeinflusst werden kann. Aber auch damit ist es nicht möglich, das Überströmventil unterhalb des vorgesehenen Öffnungsdruckes willkürlich, d. h. bei Bedarf, zu öffnen. Die Betätigung des Magnetventiles führt vielmehr nur dazu, dass die Druckbegrenzungsfunktion des Druckbegrenzers abgeschaltet wird.

Eine weitere Druckluftaufbereitungseinrichtung ist aus der DE 44 21 575 C2 bekannt. Auch hierbei sind ein Druckregler, ein Lufttrockner und ein Mehrkreisschutzventil zusammengefügt. Die einzelnen Kreise sind durch Rückschlagventile abgesichert, die durch einen über ein Magnetventil zu schaltenden Betätigungskolben aufgestoßen werden können. Die Kreise können aber auch durch Überströmventile mit begrenzter Rückströmung abgesichert sein. Auch hierbei ist jedem Überströmventil jedes Kreises ein Magnetventil zugeordnet. Das Magnetventil ist in nicht erregtem Zustand offen, d. h. der Federraum des Überströmventils ist mit dem Anströmraum verbunden. Damit besitzt das Überströmventil einen vergleichsweise erhöhten Öffnungsdruck. In erregtem Zustand schaltet das Magnetventil um und entlüftet den Federraum. Auch hier ist die über das Magnetventil beaufschlagte Wirkfläche auf der dem Anströmraum abgekehrten Seite der beweglichen Wand, also in dem Federraum vorgesehen. Dies führt dazu, dass bei einer Befüllung sich die insoweit größere Wirkfläche des Federraums so auswirkt, dass das Überströmventil nicht öffnen kann, es sei denn, das Magnetventil schaltet in die Stellung um, in der der Federraum an die Atmosphäre angeschlossen wird. Damit ist der Nachteil verbunden, dass bei Ausfall der Elektrik eine Versorgung der Kreise nicht möglich ist. Andererseits ist es bei intakter elektrischer Versorgung nicht möglich, das Überströmventil eines Kreises vor Erreichen des festgelegten Öffnungsdruckes des Überströmventils zu öffnen.

Die DE 195 15 895 A1 zeigt eine Druckluftaufbereitungseinrichtung mit einem Druckregler, einem Lufttrockner und einem integrierten Mehrkreisschutzventil. In der Füllleitung ist dem Lufttrockner ein Rückschlagventil nachgeschaltet, an dem ein zentraler Belüftungsraum beginnt, über den die Überströmventile der einzelnen Kreise mit Druckluft versorgt werden. Die Überströmventile mit begrenzter Rückströmung besitzen anströmseitig die beiden bekannten Wirkflächen. Jedes Überströmventil weist eine bewegliche Wand auf, die auf einer Feder abgestützt ist. Auf der Seite dieses Federraums ist ein Betätigungsglied vorgesehen, welches über ein Vorsteuerventil beaufschlagt bzw. entlüftet werden kann. Die Versorgung der Vorsteuerventile mit Druckluft erfolgt nicht aus dem nach dem Rückschlagventil beginnenden gemeinsamen Anströmraum der Überströmventile, sondern zweigt vor dem Rückschlagventil ab, so dass in diesem Leitungszweig während jeder Leerlaufphase keine Steuerluft zur Verfügung steht. Die Vorsteuerventile können aber auch über eine zweite Versorgungsleitung mit Druckluft versorgt werden, die dem Kreis I entnommen wird. Wenn der Kreis I defekt ist, also beispielsweise ein Leck besitzt, werden die Vorsteuerventile in der Leerlaufphase nicht mit Druckluft versorgt und können damit in diesem Zustand ein willkürliches Schließen der Überströmventile nicht bewirken. Ein willkürliches Öffnen der Überströmventile der einzelnen Kreise unterhalb des Öffnungsdruckes der Überströmventile ist nicht möglich.

Der Erfindung liegt die Aufgabe zugrunde, eine Druckluftverteilungseinrichtung der eingangs beschriebenen Art so weiterzubilden, dass das Überströmventil mindestens eines Kreises willkürlich, d. h. bei Bedarf bzw. zur Erreichung einer besonderen Funktion, geöffnet und geschlossen werden kann. In der Regel wird jedoch dabei angestrebt, mehrere Überströmventile in der beschriebenen Weise anzusteuern, wobei vorteilhaft die Anzahl der zur Ansteuerung eingesetzten Magnetventile verringert wird.

Erfindungsgemäß wird dies bei einer Druckluftverteilungseinrichtung der eingangs beschriebenen Art dadurch erreicht, dass zumindest das die dritte Wirkfläche aufweisende Überströmventil eines Kreises eine vierte Wirkfläche aufweist, die über ein anderes als das der dritten Wirkfläche zugeordnete Magnetventil ansteuerbar ist, und dass das der dritten Wirkfläche zugeordnete Magnetventil zum Öffnen des Überströmventils und das der vierten Wirkfläche zugeordnete Magnetventil zum Schließen des Überströmventils des Kreises ausgebildet ist oder umgekehrt.

Die Erfindung geht von dem Gedanken aus, die Öffnungs- und Schließmöglichkeiten für die Überströmventile einzelner Kreise zu erweitern. Dabei zielt das mögliche Öffnen eines Überströmventils darauf ab, dies unterhalb des Öffnungsdruckes des Überströmventils in seiner Normalausbildung herbeiführen zu können. Das Öffnen soll aber auch dann möglich sein, wenn das betreffende Überströmventil zuvor willkürlich geschlossen worden ist. Zusätzlich, freilich nicht gleichzeitig, soll es auch möglich sein, das betreffende Überströmventil zu schließen, also willkürlich einen Schließvorgang dann herbeizuführen, wenn zuvor eine Offenstellung vorliegt. Dies kann sowohl zur Absicherung der betreffenden Kreise eingesetzt werden als auch zur bevorzugten Befüllung der anderen Kreise des Mehrkreisschutzventils. Die bewegliche Wand dieses Überströmventils eines Kreises oder auch mehrerer Überströmventile mehrerer Kreise besitzen insgesamt vier Wirkflächen, nämlich als erste Wirkfläche die anströmseitig vorgesehene Fläche, die den Öffnungsdruck des Überströmventils bestimmt, und die zweite Wirkfläche, durch deren Beaufschlagung das Überströmventil nach dem Erreichen des Öffnungsdrucks in der Offenstellung verbleibt. Die dritte und/oder die vierte Wirkfläche an der beweglichen Wand des Überströmventils können anströmseitig oder abströmseitig vorgesehen sein. Die dritte Wirkfläche an der beweglichen Wand des Überströmventils möge die Wirkfläche sein, die zum willkürlichen Öffnen des Überströmventils benutzt wird, während die vierte Wirkfläche die Wirkfläche sein möge, die zum willkürlichen Schließen des betreffenden Überströmventils benutzt wird. Die Funktionen der dritten und vierten Wirkfläche sind freilich auch umgekehrt anwendbar. Zum Ansteuern der dritten und der vierten Wirkfläche werden zwei separate Magnetventile benötigt, wobei das eine Magnetventil zum Öffnen des Überströmventils und das andere Magnetventil zum Schließen des Überströmventils ausgebildet ist. Es gibt verschiedene Kombinationen, wie diese beiden Magnetventile ausgebildet und eingesetzt werden können. So ist es beispielsweise möglich, das der dritten Wirkfläche zugeordnete Magnetventil und das der vierten Wirkfläche zugeordnete Magnetventil so auszubilden und einzusetzen, dass diese beiden Magnetventile in stromlosem Zustand geschlossen sind, d. h. die zu der dritten Wirkfläche führende Umgehungsleitung, die aus der Zentralbelüftung abzweigt, abgesperrt wird, während gleichzeitig der Wirkraum der dritten Wirkfläche an die Atmosphäre angeschlossen ist. Wenn diese Magnetventile dann bestromt werden, also in den erregten Zustand übergehen, schalten sie um, so dass die Verbindung zur Atmosphäre abgeschlossen wird und der Wirkraum der dritten Wirkfläche mit Druckluft beaufschlagt wird. Man kann hier diese Magnetventile als direkt arbeitende Magnetventile bezeichnen. Es ist aber auch möglich, für die der dritten und der vierten Wirkfläche zugeordneten Magnetventile solche Magnetventile einzusetzen, die stromlos offenstehen, also lediglich den Entlüftungsanschluss absperren und die Verbindung in der Umgehungsleitung zu der dritten Wirkfläche bzw. zu der vierten Wirkfläche sicherzustellen. Diese Magnetventile können dann als indirekt wirkende Magnetventile bezeichnet werden. Schließlich ist es noch möglich, Magnetventile in gemischter Bauweise einzusetzen, also sowohl solche, die stromlos offen bzw. stromlos geschlossen sind.

Auch in der Anordnung der dritten und der vierten Wirkfläche an der beweglichen Wand des Überströmventils ergeben sich verschiedene Möglichkeiten. Die dritte Wirkfläche kann auf der einen Seite der beweglichen Wand des Überströmventils und die vierte Wirkfläche auf der anderen Seite der beweglichen Wand des Überströmventils angeordnet sein. In Verbindung damit ist es sinnvoll, die beiden der dritten und der vierten Wirkfläche zugeordneten Magnetventile so auszuwählen, dass sie alle entweder stromlos geschlossen oder stromlos offen sind.

Es besteht aber auch die Möglichkeit, die dritte Wirkfläche und die vierte Wirkfläche auf der gleichen Seite der beweglichen Wand des Überströmventils anzuordnen. Dabei wird dann zweckmäßig das eine Magnetventil stromlos geschlossen eingesetzt und das andere Magnetventil stromlos geöffnet.

Sinnvoll ist es weiterhin, wenn die beiden einem Überströmventil zugeordneten Magnetventile nicht nur diesem einen Überströmventil eines Kreises, sondern zugleich mehreren Überströmventilen mehrerer Kreise zugeordnet sind, so dass eine gemeinsame Schaltung der Überströmventile mehrerer Kreise bewirkt werden kann. Es empfiehlt sich beispielsweise, die beiden Betriebsbremskreise gemeinsam öffnen zu können, also die Überströmventile der beiden Betriebsbremskreise I und II gemeinsam zu öffnen. In Verbindung damit können entweder diese beiden Betriebsbremskreise auch gemeinsam geschlossen werden. Es ist auch sinnvoll, sämtliche vier Kreise I bis IV gemeinsam zu schließen, um beispielsweise in einem fünften Kreis, an den die Luftfederanlage angeschlossen sein möge, eine schnelle Befüllung erreichen zu können, damit kurzzeitig genügend Druckluft zur Verfügung steht, um beispielsweise während eines Beladungsvorgangs des Fahrzeugs den Anhebevorgang zu bewirken.

Die bewegliche Wand lässt sich vorteilhaft als Stufenkolben ausbilden, auf dem dann auch die dritte und die vierte Wirkfläche verwirklicht sind. Alternativ kann die bewegliche Wand aber auch als Membrankolben ausgebildet werden.

Bei den beiden Magnetventilen, die der dritten und der vierten Wirkfläche eines oder mehrerer Überströmventile eines oder mehrerer Kreise zugeordnet sind, muss es sich nicht um die einzigen Magnetventile des betreffenden Mehrkreisschutzventils handeln. Es ist vielmehr auch möglich, zusätzlich ein weiteres Magnetventil an einem oder mehreren Kreisen anzuordnen und einzusetzen, welches nur zum Öffnen des betreffenden Überströmventils ausgebildet und geeignet ist. Eine solche Maßnahme empfiehlt sich insbesondere am Kreis III, der die Anhängerbremsung versorgt.

Unabhängig davon kann einem Überströmventil eines Kreises auch ein Druckbegrenzer nachgeschaltet sein. Es kann sich dabei um das Überströmventil mit lediglich zwei Wirkflächen, aber auch um ein Überströmventil mit insgesamt drei oder vier Wirkflächen handeln.

Die Erfindung wird wird anhand verschiedener Ausführungsbeispiele weiter erläutert und beschrieben. Es zeigen:
- Fig. 1: eine schematisierte Schnittdarstellung durch eine Druckluftaufbereitungseinrichtung mit der Darstellung der für die Realisierung der Erfindung wesentlichen Elemente,
- Fig. 2: eine ähnliche Schnittdarstellung wie Fig. 1, jedoch bei einer zweiten Ausführungsform,
- Fig. 3: eine dritte Ausführungsform einer Druckluftaufbereitungseinrichtung,
- Fig. 4: eine vierte Ausführungsform einer Druckluftaufbereitungseinrichtung, und
- Fig. 5: eine fünfte Ausführungsform einer Druckluftaufbereitungseinrichtung.

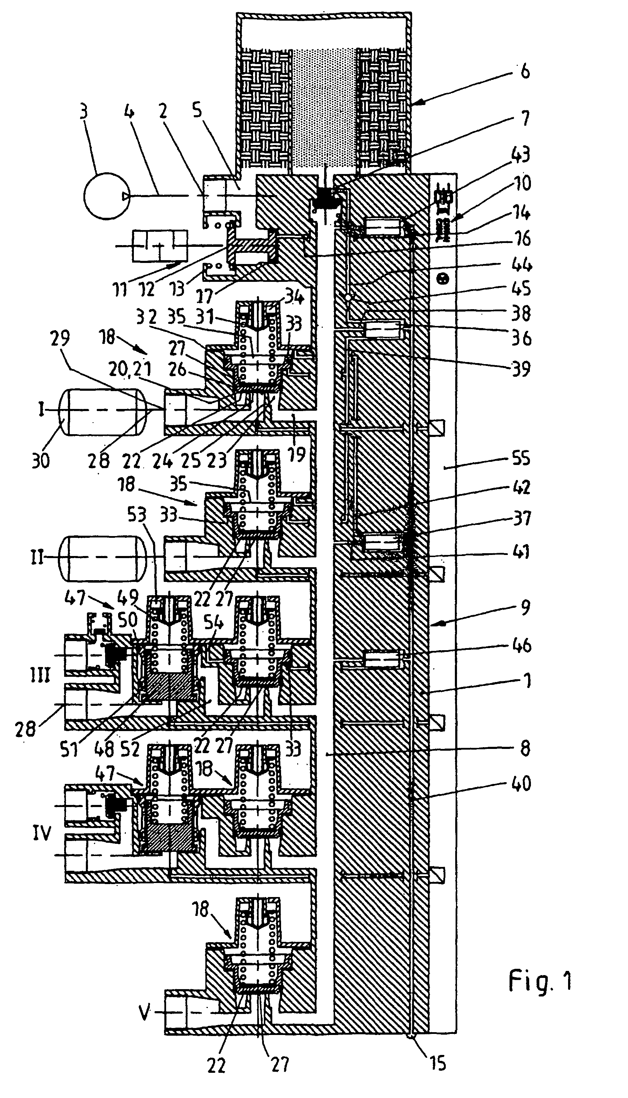

In Fig. 1 ist eine Druckluftaufbereitungseinrichtung für Kraftfahrzeug-Druckluftanlagen dargestellt, die schematisch ein gemeinsames Gehäuse 1 erkennen lässt, in dem bzw. an dem wesentliche Elemente der Aufbereitungseinrichtung untergebracht sind. Das Gehäuse 1 weist einen Anschluss 2 auf, an welchen eine von einem Kompressor 3 herangeführte Verbindungsleitung 4 angeschlossen ist. Der Anschluss 2 führt zu einem Verteilungsraum 5, von dem die herangeführte Druckluft einerseits über einen Lufttrockner 6 strömt und vor ein Rückschlagventil 7 gelangt. Bei aufgestoßenem Rückschlagventil 7 gelangt die Druckluft in eine Zentralbohrung 8, an der die einzelnen Kreise angeschlossen sind. Es wird hier die Funktion eines integrierten Mehrkreisschutzventiles 9 erreicht. In dem Gehäuse 1 ist weiterhin ein Druckregler 10 integriert, der hier als elektrischer Druckregler ausgebildet ist. Der Druckregler 10 weist ein Auslassventil 11 auf, dessen Kolben 12 auf einer Schließfeder 13 abgestützt ist. Zu dem Auslassventil 11 gehört ein Magnetventil 14, welches mit Druckluft aus der Zentralbohrung 8 versorgt wird, einen eigenen Entlüftungsanschluss 15 aufweist und über das Druckluft über eine Leitung 16 zu einem Betätigungskolben 17 gelangen kann, um das Auslassventil 11 zu öffnen.

Unter einer Druckluftaufbereitungseinrichtung wird eine solche Einrichtung verstanden, die neben dem Mehrkreisschutzventil 9 auf jedem Fall einen Druckregler 10 und einen Lufttrockner 6 aufweist. Die Erfindung lässt sich aber auch dann anwenden, wenn lediglich ein Mehrkreisschutzventil oder vorzugsweise ein Mehrkreisschutzventil 9 in einem Gehäuse 1 angeordnet ist und beispielsweise ein Lufttrockner 6 und ein Druckregler 10 in einem anderen Geräteteil verwirklicht werden.

Für jeden Kreis I, II, III, IV und V ist je ein Überströmventil 18 mit begrenzter Rückströmung vorgesehen, welches über eine Leitung 19 an die Zentralbohrung 8 angeschlossen ist und von dort mit Druckluft versorgt wird. Das Überströmventil 18 weist eine bewegliche Wand 20 auf, die hier in Form eines Stufenkolbens 21 realisiert ist. Die bewegliche Wand 20 bzw. der Stufenkolben 21 weist anströmseitig eine erste Wirkfläche 22 auf, vor der ein Anströmraum 23 gebildet ist, der über die Leitung 19 in dauernder Verbindung zu der Zentralbohrung 8 steht. Die bewegliche Wand 20 bzw. der Stufenkolben 21 trägt stirnseitig eine Dichtungsplatte 24, die mit einem eingezogenen Rand 25 ein Durchlassventil 24, 25 bildet. Der Stufenkolben 21 besitzt eine Dichtung 26, so dass die Wirkfläche 22 zwischen dieser Dichtung 26 und dem eingezogenen Rand 25 begrenzt ist. Der Stufenkolben 21 weist eine zweite Wirkfläche 27 auf, die von dem eingezogenen Rand 25 als Kreisfläche umgeben und damit festgelegt ist. Diese zweite Wirkfläche 27 wird dauernd abströmseitig beaufschlagt, d. h. von ihr führt eine Leitung 28 über einen Anschluss 29 zu einem Vorratsbehälter 30, der dem Kreis I zugeordnet ist. Der Stufenkolben 21 bzw. die bewegliche Wand 20 ist auf der dem Anströmraum 23 abgekehrten Rückseite auf einer Feder 31 abgestützt, die gehäuseseitig aufgelagert und über einen Federteller mit Einstellschraube einstellbar ausgebildet sein kann. Durch die eingestellte Kraft der Feder 31 in Verbindung mit der Bemessung der ersten Wirkfläche 22 wird der Öffnungsdruck des Überströmventils 18 festgelegt, bei welchem das Durchlassventil 24, 25 öffnet.

Der Stufenkolben 21 bzw. die bewegliche Wand 20 weist eine weitere Dichtung 32 auf, die an einem gestuften Teil mit vergrößertem Durchmesser ausgebildet ist. Zwischen den Dichtungen 26 und 32 ist eine dritte Wirkfläche 33 realisiert. Auch diese dritte Wirkfläche 33 ist auf der dem Anströmraum 23 zugekehrten Seite des Stufenkolbens 21 angeordnet. Die Feder 31 ist in einem Rückraum 34 angeordnet. An dem Stufenkolben 21 bzw. der beweglichen Wand 20 ist im Anschluss an den Rückraum 34 eine vierte Wirkfläche 35 vorgesehen. Zur Verdeutlichung sind die vier Wirkflächen 22, 27, 33, 35 an dem Überströmventil 18 des Kreises II noch einmal gesondert dargestellt.

Den beiden Überströmventilen 18 der Kreise I und II sind zwei Magnetventile 36 und 37 zugeordnet. Es versteht sich, dass die Zuordnung auch nur dem einen Überströmventil 18 des Kreises I gelten kann. Das Magnetventil 36 ist der dritten Wirkfläche 33 zugeordnet. Das Magnetventil 37 ist der vierten Wirkfläche 35 zugeordnet. Das Magnetventil 36 dient zum willkürlichen Öffnen des Überströmventils 18, hier der beiden Überströmventile 18 der Kreise I und II. Von der Zentralbohrung 8 führt eine Versorgungsleitung 38 zu dem Magnetventil 36. Bei diesem Magnetventil 36 handelt es sich um ein solches, welches, wie in Fig. 1 dargestellt, in stromlosem Zustand geschlossen ist, also die Versorgungsleitung 38 absperrt, während gleichzeitig zu den dritten Wirkflächen 33 führende Leitungen 39 über eine gemeinsame Entlüftungsleitung 40 an die Atmosphäre angeschlossen sind. Es ist erkennbar, dass beim Erregen des Magnetventils 36 dieses in seine andere Stellung umschaltet, also die Entlüftung der dritten Wirkflächen 33 absperrt und beendet und gleichzeitig diese dritten Wirkflächen 33 der beiden Überströmventile 18 der Kreise I und II mit Druckluft aus der Zentralbohrung 8 beaufschlagt. Durch diese Beaufschlagung der dritten Wirkfläche 33 erhält der Stufenkolben 21 bzw. die bewegliche Wand 20 des Überströmventils 18 eine zusätzliche, in Öffnungsrichtung des Überströmventils 18 wirkende Kraft bzw. Beaufschlagung. Diese Kraft kann durch die Ansteuerung des Magnetventils 36 jederzeit bei Bedarf ausgeübt bzw. herbeigeführt werden.

Ähnlich verhält es sich mit dem Magnetventil 37. Das Magnetventil 37 wird durch eine Versorgungsleitung 41 von der Zentralbohrung 8 mit Druckluft versorgt, die nach dem Rückschlagventil 7 abzweigt bzw. beginnt. Von dem Magnetventil 37 führen Leitungen 42 zu der vierten Wirkfläche 35 an den beiden Überströmventilen der Kreise I und II. Die vierte Wirkfläche 35 ist abströmseitig, also im Bereich des Rückraums 34 vorgesehen und befindet sich damit auf der anderen Seite der beweglichen Wand 20 im Vergleich zu der dritten Wirkfläche 33. Das Magnetventil 37 dient zum willkürlichen Schließen der Überströmventile der Kreise I und II. Es ist hier in Fig. 1 die Kombination gezeigt, bei der die dritte und die vierte Wirkfläche 33, 35 auf unterschiedlichen Seiten der beweglichen Wand 21 der Überströmventile 18 angeordnet sind. In Verbindung damit werden zwei Magnetventile 36, 37 eingesetzt, die beide stromlos geschlossen sind, also die Versorgungsleitungen 38 und 41 absperren.

Es sei hier darauf hingewiesen, dass der Druckregler 10 ein eigenes Magnetventil 43 aufweist, also ein separates Magnetventil 43 zusätzlich zu den Magnetventilen 36 und 37.

Das Magnetventil 36, welches zum willkürlichen Öffnen der Überströmventile 18 der Kreise I und II dient, erfüllt zusätzlich die Funktion der Aussteuerung einer Regeneration über eine Regenerationsleitung 44, in der ein Rückschlagventil 45 angeordnet ist. Es versteht sich, dass dies nur eine zusätzliche Funktion des Magnetventils 36 ist, die auch entfallen bzw. auch in anderer Weise realisiert werden kann.

Auch der Kreis III weist ein Überströmventil 18 mit begrenzter Rückströmung auf. Dieses Überströmventil 18 besitzt neben den beiden Wirkflächen 22 und 27 die dritte Wirkfläche 33, nicht aber die vierte Wirkfläche 35. Dem Überströmventil 18 des Kreises III ist ein weiteres Magnetventil 46 zugeordnet, welches also zusätzlich und unabhängig zu den Magnetventilen 36 und 37 vorgesehen ist. Das Magnetventil 46 dient dazu, das Überströmventil 18 des Kreises III bei Bedarf zu öffnen. Diese Öffnung soll unabhängig von einer Öffnung der Überströmventile 18 der Kreise I und II über das Magnetventil 36 erfolgen. Dem Überströmventil 18 des Kreises III kann ein Druckbegrenzer 47 nachgeschaltet sein. Der Druckbegrenzer 47 weist einen Kolben 48 auf, der auf einer Begrenzungsfeder 49 abgestützt ist. Auch die Kraft der Begrenzungsfeder 49 kann einstellbar ausgebildet sein. Der Kolben 48 des Druckbegrenzers 47 ist von einem gehäusefest gelagerten Einsatz 50 umgeben, der, wie aus der Zeichnung ersichtlich ist, abgedichtet und angeordnet untergebracht ist.

Der Kolben 48 bildet mit einem Rand 51 des Einsatzkörpers 50 ein Durchlassventil für Druckluft, die über eine Leitung 52 von dem Überströmventil 18 herangeführt wird. Von dem Druckbegrenzer 47 führt hier eine Leitung 28 zu dem betreffenden Vorratsbehälter 30 des betreffenden Kreises (nicht dargestellt). Die Begrenzungsfeder 49 ist in einem Betätigungsraum 53 untergebracht. Der Betätigungsraum 53 ist über eine Verbindungsleitung 54 mit dem Wirkraum der dritten Wirkfläche 33 des betreffenden Überströmventils 18 verbunden, so dass sich eine Schaltbewegung des Magnetventils 46 auch auf den nachgeschalteten Druckbegrenzer 47 auswirkt.

Ähnlich wie der Kreis III ist auch der Kreis IV ausgebildet, nämlich mit einem Überströmventil 18 und einem nachgeschalteten Druckbegrenzer 47.

Der Kreis V besitzt ein Überströmventil 18 mit begrenzter Rückströmung in ganz normaler Bauart. Es sind hier lediglich die beiden Wirkflächen 22 und 27 verwirklicht. An den Kreis V kann die Luftfederung des Fahrzeugs angeschlossen sein.

Fig. 1 zeigt eine Ausführungsform, bei der alle Magnetventile 36, 37, 43, 46 solche Magnetventile sind, die stromlos geschlossen sind. Dies bezieht sich insbesondere auf das Magnetventil 36 zum Öffnen der Überströmventile 18 der Kreise I und II und auf das Magnetventil 37 zum Schließen der Überströmventile 18 der Kreise I und II. Die dritte Wirkfläche 33 und die vierte Wirkfläche 35 sind auf unterschiedlichen Seiten der beweglichen Wand 20 angeordnet.

Die Druckluftaufbereitungseinrichtung gemäß Fig. 1 arbeitet wie folgt. Sobald der Kompressor 3 in Tätigkeit gesetzt wird, gelangt in der Lastlaufphase, die durch den Druckregler 10 eingestellt wird, Druckluft über das Rückschlagventil 7 in die Zentralbohrung 8. Die Überströmventile 18 der verschiedenen Kreise sind auf einen bestimmten Öffnungsdruck eingestellt. Sobald dieser Öffnungsdruck an der ersten Wirkfläche 22 erreicht wird, öffnet das jeweilige Überströmventil 18 und es gelangt Druckluft zu dem betreffenden Vorratsbehälter 30. Sobald auch die zweite Wirkfläche 27 mit diesem Druck beaufschlagt wird, verbleibt das Überströmventil 18 in der geöffneten Stellung.

Wenn in den Kreisen I und II eine bevorzugte Befüllung realisiert werden soll, wird das Magnetventil 36 in die erregte Stellung überführt, bevor der normale Öffnungsdruck der Überströmventile 18 der Kreise I und II erreicht ist. Durch die auf die dritte Wirkfläche 33 ausgeübte Zusatzkraft öffnen die Überströmventile 18 der Kreise I und II noch vor Erreichen des Öffnungsdruckes, so dass die Vorratsbehälter 30 der Kreise I und II bevorzugt aufgefüllt werden, während gleichzeitig die Kreise III bis V noch nicht aufgefüllt werden. Die Vorratsbehälter der Kreise III bis V werden erst dann mit Druckluft aufgefüllt, wenn die Öffnungsdrücke der Überströmventile 18 dieser Kreise III bis V überschritten werden. Zu diesem Zeitpunkt kann das Magnetventil 36 wieder umgeschaltet werden, weil dann ohnehin sämtliche Überströmventile 18 in der geöffneten Stellung verbleiben. Das Erreichen des betreffenden Druckes kann über entsprechende Drucksensoren festgestellt und einer zentralen Steuereinrichtung 55 mitgeteilt werden, über die auch die Magnetventile 36 und 37 angesteuert werden. Die Drucksensoren erfassen den abströmseitigen Druck, also den Druck in den jeweiligen Vorratsbehältern 30.

Wenn es dagegen gewünscht wird, eine bevorzugte Befüllung der Kreise III bis V herbeizuführen, wird von der Steuereinrichtung 55 das Magnetventil 37 angesteuert und damit erregt. Dies führt dazu, dass die vierte Wirkfläche 35 mit Druckluft beaufschlagt wird und damit die Überströmventile 18 der Kreise I und II auch weiterhin geschlossen gehalten werden, da sie sich zu dieser Zeit ohnehin noch in geschlossenem Zustand befinden. Da die Kreise III und IV vielfach nur Vorratsbehälter 30 mit relativ geringem Volumen aufweisen, die relativ kurzfristig befüllt werden, führt das Schließen der Überströmventile 18 der Kreise I und II letztlich dazu, dass der Kreis V bevorzugt befüllt wird. Dies ist nützlich für eine an dem Kreis V angeschlossene Luftfederung, um z. B. in kurzer Zeit einen Beladungsvorgang zuzulassen.

Unabhängig oder in Kombination mit der Schaltung der Magnetventile 36 und 37 kann auch das Magnetventil 46 des Kreises III über die Steuereinrichtung 55 betätigt werden.

Das willkürliche Öffnen der Magnetventile 18 der Kreise I und II über das Magnetventil 36 und das willkürliche Schließen über das Magnetventil 37 kann nicht nur bei bevorzugter Befüllung genutzt werden, sondern auch in sonstigen Situationen, wenn beispielsweise ein Leck in einem der beiden Betriebsbremskreise I oder II auftritt. Dabei kann es dann auch erforderlich werden, gezielt einen Luftaustausch zwischen einzelnen Kreisen zuzulassen, also über die Steuereinrichtung 55 die entsprechende Umschaltung der Magnetventile 36 und 37 kurzzeitig oder für länger zuzulassen.

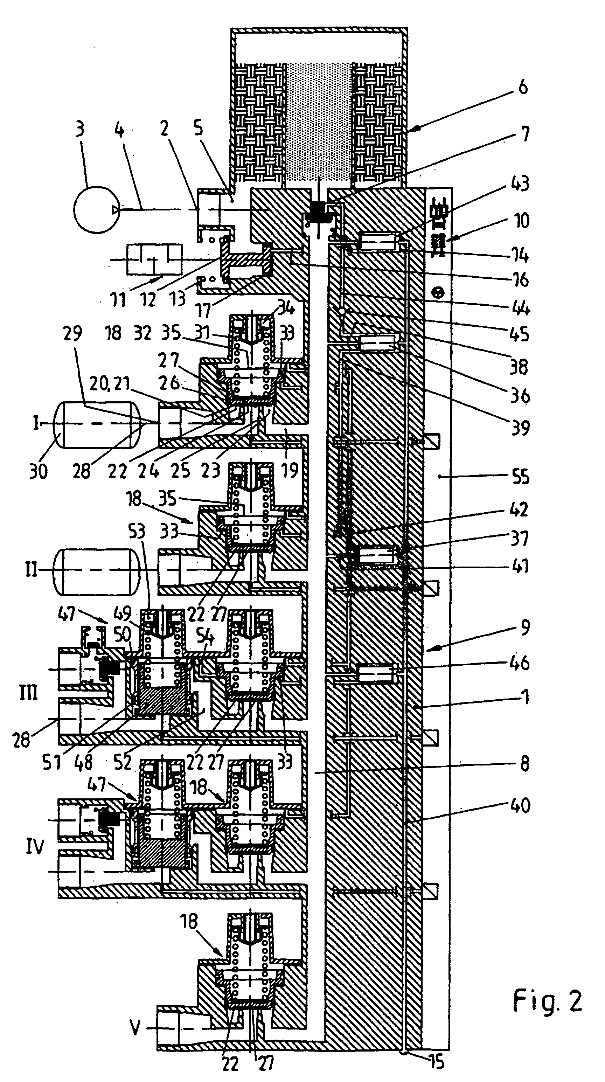

In Fig. 2 ist eine weitere Ausführungsform einer Druckluftaufbereitungseinrichtung dargestellt, die in weiten Bereichen ähnlich wie die Ausführungsform der Fig. 1 ausgebildet und aufgebaut ist, weshalb auf die dortige Beschreibung der Anordnung und Wirkungsweise hingewiesen werden kann. Auch hier ist das Magnetventil 36 zum Öffnen der Überströmventile 18 der beiden Kreise I und II ausgebildet, angeordnet und angeschlossen. Das Magnetventil 37 bedient hier jedoch nicht nur die Kreise I und II, sondern zusätzlich auch noch die Kreise III und IV. Die dritte Wirkfläche 33 und die vierte Wirkfläche 35 sind auch hier auf unterschiedlichen Seiten der beweglichen Wand 20 angeordnet, wie dies auch bei dem Ausführungsbeispiel der Fig. 1 der Fall ist. Alle Magnetventile, insbesondere die Magnetventile 36 und 37, sind solche, die stromlos geschlossen sind, wie in Fig. 2 dargestellt.

Die Wirkungsweise der Druckluftaufbereitungseinrichtung gemäß Fig. 2 gestattet eine besonders schnelle bevorzugte Befüllung des Kreises V der Luftfederung, indem das Magnetventil 37 angesteuert und in den erregten Zustand überführt wird. Damit werden die Überströmventile 18 der Kreise I bis IV so lange geschlossen gehalten, bis die bevorzugte Befüllung des Kreises V abgeschlossen ist. Danach ergeben sich wieder die schon beschriebenen Schaltmöglichkeiten in entsprechender Weise.

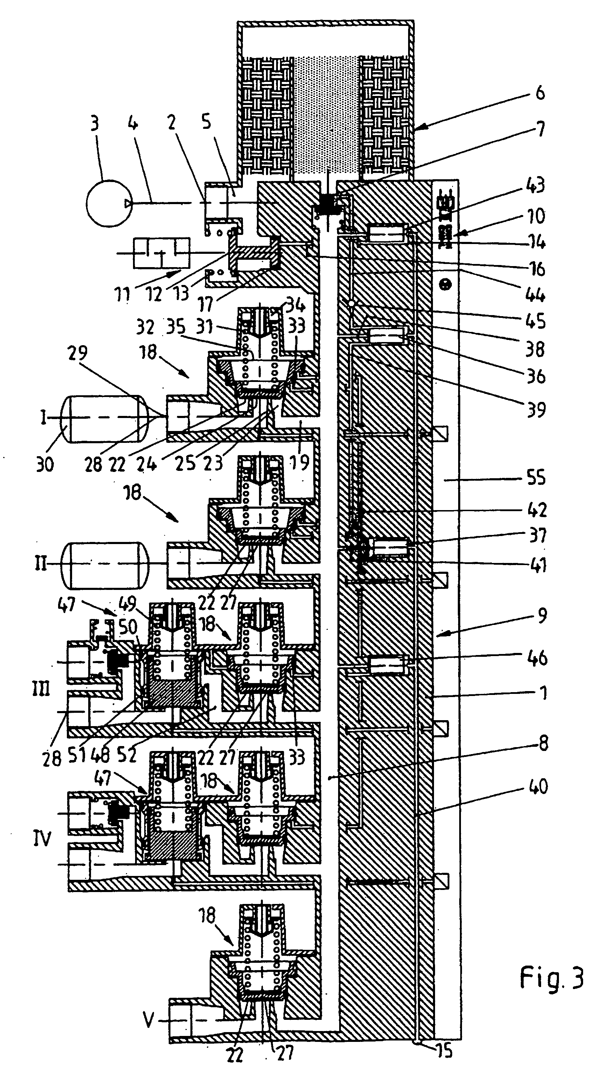

Auch die Ausführungsform der Druckluftaufbereitungseinrichtung gemäß Fig. 3 schließt an die vorangehenden Ausführungsformen an. Das Magnetventil 36 dient hier zum willkürlichen Öffnen der Überströmventile 18 der Kreise I und II. Das Magnetventil 37 dient zum willkürlichen Schließen der Überströmventile 18 der Kreise I, II und IV. Das Magnetventil 46 dient zum Öffnen des Überströmventils 18 des Kreises III mit gleichzeitiger Beaufschlagung des Druckbegrenzers 47. Die Überströmventile 18 der Kreise I, II und III besitzen die dritte Wirkfläche 33. Die Überströmventile 18 der Kreise I, II und IV besitzen die vierte Wirkfläche 35. Es ist erkennbar, dass hier die dritte Wirkfläche 33 und die vierte Wirkfläche 35 auf der gleichen Seite der beweglichen Wand 20 bzw. des Stufenkolbens 21, nämlich anströmseitig, vorgesehen sind. Das Magnetventil 36, welches zum Öffnen der Überströmventile 18 dient, ist ein solches, welches stromlos geschlossen ist. Das Magnetventil 37, welches zum Schließen der Überströmventile der Kreise I, II und IV dient, ist ein solches, welches stromlos geöffnet ist.

Beim Umschalten des Magnetventils 37 wird die Zusatzkraft von der vierten Wirkfläche 35 weggenommen. Das Magnetventil 37 kann damit auch als indirekt arbeitendes Magnetventil bezeichnet werden.

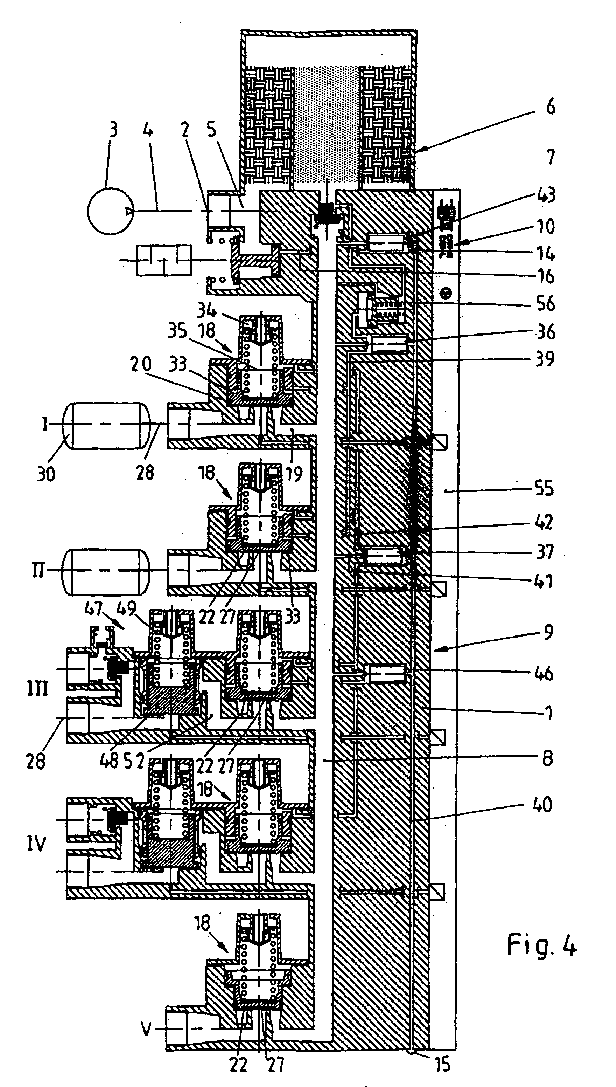

Bei der Ausführungsform gemäß Fig. 4 dient das Magnetventil 36 zum willkürlichen Öffnen der Überströmventile 18 der beiden Kreise I und II. Es handelt sich um ein Magnetventil 36, welches in stromlosem Zustand geöffnet ist. Das Magnetventil 37 dient zum Schließen der Überströmventile 18 der Kreise I bis IV. Es handelt sich um ein Magnetventil 37, welches stromlos geschlossen ist, also die Verbindungsleitung absperrt und die Entlüftung der betreffenden Wirkfläche 35 in dieser Stellung herbeiführt bzw. zulässt. Es ist erkennbar, dass die Wirkflächen 33 und 35 auf der gleichen Seite der beweglichen Wand 20, nämlich auf der Seite des Rückraums 34, angeordnet sind. Das Magnetventil 36 dient gleichzeitig dazu, eine Regenerationsphase aussteuern, und zwar über ein Relaisventil 56. Auch diese Zusatzfunktion verträgt sich mit der Hauptfunktion des Magnetventils 36, nämlich dem willkürlichen Öffnen der Überströmventile 18 der Kreise I und II.

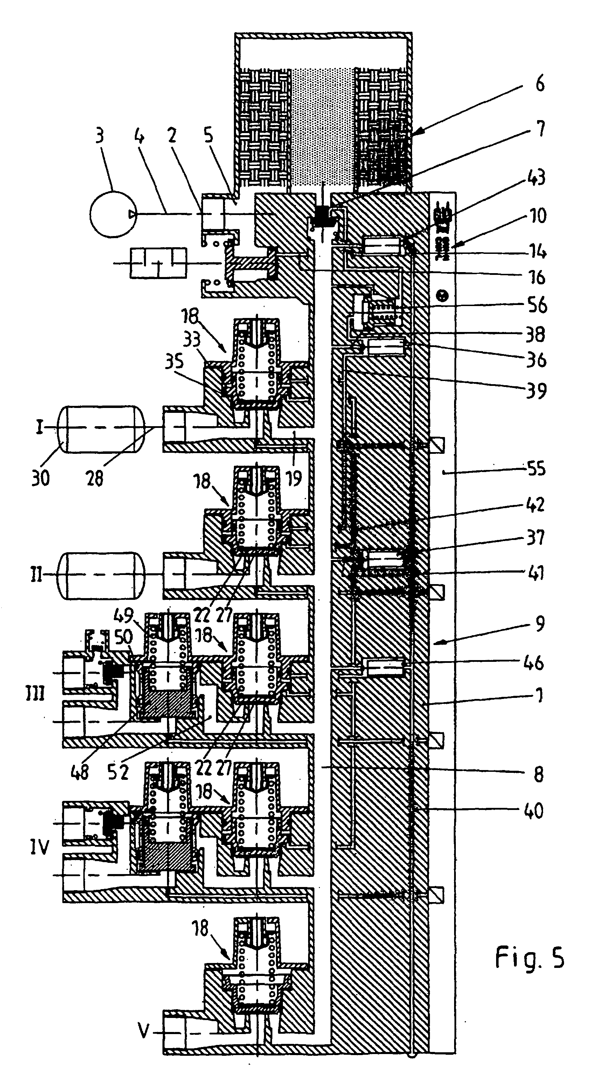

Die Ausführungsform der Druckluftaufbereitungseinrichtung gemäß Fig. 5 zeigt eine weitere Variationsmöglichkeit der Überströmventile 18 der Kreise I und II. Das Magnetventil 37 dient zum Schließen der Überströmventile 18 der Kreise I bis IV. Das Magnetventil 46 der Fig. 1 und 2 dient zum Öffnen des Überströmventils 18 des Kreises III. Die Wirkflächen 33, 35 sind hier auf unterschiedlichen Seiten der beweglichen Wand 20 der Überströmventile 18 angeordnet. Die Magnetventile 36 und 37 sind hier solche, die stromlos geöffnet sind. Abweichend davon wird zweckmäßig der Druckregler 10 über das Magnetventil 43 angesteuert, welches stromlos geschlossen ist. Es versteht sich, dass bei allen Ausführungsformen der Druckregler 10 und/oder der Trockner 6 auch entfallen können, so dass in einem solchen Falle eine Druckluftverteilungseinrichtung vorliegt.

### BEZUGSZEICHENLISTE

- 1 -: Gehäuse
- 2 -: Anschluss
- 3 -: Kompressor
- 4 -: Verbindungsleitung
- 5 -: Verteilungsraum
- 6 -: Lufttrockner
- 7 -: Rückschlagventil
- 8 -: Zentralbohrung
- 9 -: Mehrkreisschutzventil
- 10 -: Druckregler

- 11 -: Auslassventil
- 12 -: Kolben
- 13 -: Schließfeder
- 14 -: Magnetventil
- 15 -: Entlüftungsanschluss
- 16 -: Leitung
- 17 -: Betätigungskolben
- 18 -: Überströmventil
- 19 -: Leitung
- 20 -: bewegliche Wand

- 21 -: Stufenkolben
- 22 -: erste Wirkfläche
- 23 -: Anströmraum
- 24 -: Dichtungsplatte
- 25 -: Rand
- 26 -: Dichtung
- 27 -: zweite Wirkfläche
- 28 -: Leitung
- 29 -: Anschluss
- 30 -: Vorratsbehälter

- 31 -: Feder
- 32 -: Dichtung
- 33 -: dritte Wirkfläche
- 34 -: Rückraum
- 35 -: vierte Wirkfläche
- 36 -: Magnetventil
- 37 -: Magnetventil
- 38 -: Versorgungsleitung
- 39 -: Leitung
- 40 -: Entlüftungsleitung

- 41 -: Versorgungsleitung
- 42 -: Leitungen
- 43 -: Magnetventil
- 44 -: Regenerationsleitung
- 45 -: Rückschlagventil
- 46 -: Magnetventil
- 47 -: Druckbegrenzer
- 48 -: Kolben
- 49 -: Begrenzungsfeder
- 50 -: Einsatzkörper

- 51 -: Rand
- 52 -: Leitung
- 53 -: Betätigungsraum
- 54 -: Verbindungsleitung
- 55 -: Steuereinrichtung
- 56 -: Relaisventil

## Patentansprüche

1. Druckluftverteilungseinrichtung für Kraftfahrzeug-Druckluftanlagen, mit einem Mehrkreisschutzventil (9) und vorzugsweise einem Druckregler (10) und einem Lufttrockner (6), wobei das Mehrkreisschutzventil (9) für mehrere Kreise je ein Überströmventil (18) mit begrenzter Rückströmung und mindestens zwei Magnetventile (36, 37) mit eigenem Entlüftungsanschluss beinhaltet, jedes Überströmventil (18) eine bewegliche Wand (20) aufweist, die einen Anströmraum (23) von einem Rückraum (34) mit Feder (31) abteilt, und die bewegliche Wand (20) zumindest eines Überströmventils (18) eines Kreises außer den beiden anströmseitigen Wirkflächen (22, 27) eine weitere über eines der Magnetventile (36, 37) beaufschlagbare dritte Wirkfläche (33) aufweist, **dadurch gekennzeichnet, dass** zumindest das die dritte Wirkfläche (33) aufweisende Überströmventil (18) eines Kreises eine vierte Wirkfläche (35) aufweist, die über ein anderes als das der dritten Wirkfläche (33) zugeordnete Magnetventil (36) ansteuerbar ist, und dass das der dritten Wirkfläche (33) zugeordnete Magnetventil (36) zum Öffnen des Überströmventils (18) und das der vierten Wirkfläche (35) zugeordnete Magnetventil (37) zum Schließen des Überströmventils (18) des Kreises ausgebildet ist.

2. Druckluftverteilungseinrichtung nach Anspruch 1, **dadurch gekennzeichnet, dass** die dritte Wirkfläche (33) auf der einen Seite der beweglichen Wand (20) des Überströmventils (18) und die vierte Wirkfläche (35) auf der anderen Seite der beweglichen Wand (20) des Überströmventils (18) angeordnet sind und dass die beiden der dritten und der vierten Wirkfläche (33, 35) zugeordneten Magnetventile (36, 37) stromlos zu oder stromlos offen ausgebildet sind.

3. Druckluftverteilungseinrichtung nach Anspruch 1, **dadurch gekennzeichnet, dass** die dritte Wirkfläche (33) und die vierte Wirkfläche (35) auf der gleichen Seite der beweglichen Wand (20) des Überströmventils (18) angeordnet sind und dass das eine Magnetventil (36) stromlos zu und das andere Magnetventil (37) stromlos offen ausgebildet ist.

4. Druckluftverteilungseinrichtung nach einem oder mehreren der Ansprüche 1 bis 3, **dadurch gekennzeichnet, dass** das der dritten Wirkfläche (33) zugeordnete Magnetventil (36) und/oder das der vierten Wirkfläche (35) zugeordnete Magnetventil (37) zur Ansteuerung mindesten zweier Überströmventile (18) zweier Kreise ausgebildet ist.

5. Druckluftverteilungseinrichtung nach Anspruch 4, **dadurch gekennzeichnet, dass** das der dritten Wirkfläche (33) zugeordnete Magnetventil (36) und das der vierten Wirkfläche (35) zugeordnete Magnetventil (37) zur Ansteuerung der beiden Kreise I und II ausgebildet sind.

6. Druckluftverteilungseinrichtung nach einem oder mehreren der Ansprüche 1 bis 5, **dadurch gekennzeichnet, dass** die bewegliche Wand (20) des Überströmventils (18), dem zwei Magnetventile (36, 37) zur Ansteuerung zugeordnet sind, als Stufenkolben (21) ausgebildet ist.

7. Druckluftverteilungseinrichtung nach Anspruch 5, **dadurch gekennzeichnet, dass** neben den beiden Magnetventilen (36, 37), die der oder den dritten Wirkflächen (33) und der oder den vierten Wirkflächen (35) zugeordnet sind, ein drittes Magnetventil (46) zum Öffnen des Überströmventils (18) des Kreises III unterhalb des eingestellten Öffnungsdruckes vorgesehen ist.

8. Druckluftverteilungseinrichtung nach Anspruch 7, **dadurch gekennzeichnet, dass** einem oder mehreren der Überströmventile (18) ein Druckbegrenzer (47) nachgeschaltet ist, der einen in Öffnungsrichtung auf einer Begrenzungsfeder (49) abgestützten Kolben (48) und auf der der Begrenzungsfeder (49) zugekehrten Seite eine Betätigungsfläche aufweist, deren Betätigungsraum (53) über eine Verbindungsleitung (54) an den Wirkraum der dritten Wirkfläche (33) des Überströmventils (18) angeschlossen ist.

9. Druckluftverteilungseinrichtung nach einem oder mehreren der Ansprüche 1 bis 8, **dadurch gekennzeichnet, dass** das der vierten Wirkfläche (35) zugeordnete Magnetventil (37) zur Ansteuerung der Überströmventile (18) der Kreise I bis IV ausgebildet ist.

## Claims

1. Compressed air distributing apparatus for compressed air systems of motor vehicles, comprising a multi circuit protection valve (9) and preferably a pressure controller (10) and an air dryer (6), the multi circuit protection valve (9) including an overflow valve (18) with limited backflow each of the overflow valves being associated with one of the circuits and including at least two solenoid valves (36, 37) having an own venting connection to the atmosphere, each of the overflow valves (18) including a movable valve body (20) separating a flow chamber (23) and a rear chamber (34) containing a spring (31), the valve body (20) of at least one of the overflow valves of a circuit including the two upstream arranged surfaces (22, 27) and a third effective surface (33), the third effective surface (33) being designed and arranged to be controlled by one of the solenoid valves (36, 37), **characterized in that** at least the overflow valve (18) of a circuit including the third effective surface (33) comprises a fourth effective surface (35), the fourth effective surface (35) being controlled by another solenoid valve than the solenoid valve (36) controlling the third effective surface (33), and **in that** the solenoid valve (36) associated with the third effective surface (33) is designed and arranged to open the overflow valve (18) and the solenoid valve (37) associated with the fourth effective surface (35) is designed and arranged to close the overflow valve (18) of the circuit.

2. Compressed air distributing apparatus of claim 1, **characterized in that** the third effective surface (33) is located at the one side of the valve body (20) of the overflow valve (18) and the fourth effective surface (35) is located at the other side of the valve body (20) of the overflow valve (18), and **in that** the two solenoid valves (36, 37) associated with the third and the fourth effective surface (33, 35) are designed and arranged to be closed or to be opened in currentless condition.

3. Compressed air distributing apparatus of claim 1, **characterized in that** the third effective surface (33) and the fourth effective surface (35) are located at the same side of the valve body (20) of the overflow valve (18), and **in that** the one solenoid valve (36) is designed to be closed in the currentless condition and the other solenoid valve (37) is designed to be opened in the currentless condition.

4. Compressed air distributing apparatus of one or more of the claims 1 to 3, **characterized in that** the solenoid valve (36) being associated with the third effective surface (33) and/or the solenoid valve (37) being associated with the fourth effective surface (35) are designed and arranged to control at least two overflow valves (18) of two circuits.

5. Compressed air distributing apparatus of claim 4, **characterized in that** the solenoid valve (36) being associated with the third effective surface (33) and the solenoid valve (37) being associated with the fourth effective surface (35) are designed and arranged to control the two circuits I and II.

6. Compressed air distributing apparatus of one or more of the claims 1 to 5, **characterized in that** the valve body (20) of the overflow valve (18) associated with two solenoid valves (36, 37) for controlling is designed as a stepped piston (21).

7. Compressed air distributing apparatus of claim 5, **characterized in that** besides the two solenoid valves (36, 37) associated with one or more of the third effective surfaces (33) and with one or more of the fourth effective surfaces (35) a third solenoid valve (46) is provided to open the overflow valve (18) of circuit III below an adjusted opening pressure.

8. Compressed air distributing apparatus of claim 7, **characterized in that** a pressure limiting device (47) is arranged downstream of one or more of the overflow valves (18), the pressure limiting device (47) including a piston (48) being supported on a limiting spring (49) in an opening direction and having an actuation surface facing the limiting spring (49), the actuation surface being associated with an actuation chamber (53), the actuation chamber (53) being connected to the effective chamber of the third effective surface (33) of the overflow valve (18) by a connecting conduit (54).

9. Compressed air distributing apparatus of one or more of the claims 1 to 8, **characterized in that** the solenoid valve (37) being associated with the fourth effective surface (35) is designed and arranged to control the overflow valves (18) of circuits I to IV.

## Revendications

1. Dispositif de distribution d'air comprimé pour installations d'air comprimé de véhicule automobile, comportant une soupape de protection multicircuit (9) et de préférence un régulateur de pression (10) ainsi qu'un séchoir à air (6), la soupape de protection multicircuit (9) contenant pour chacun des circuits une soupape de trop-plein (18) avec reflux limité et au moins deux soupapes magnétiques (36, 37) avec leur propre raccord de purge d'air, chaque soupape de trop-plein (18) comportant une paroi mobile (20) qui sépare un compartiment d'arrivée de courant (23) d'un compartiment de retour (34) avec ressort (31), et la paroi mobile (20) d'au moins une soupape de trop-plein (18) d'un circuit présentant, outre les deux surfaces actives (22, 27) côté arrivée, une autre troisième surface active (33), pouvant être sollicitée par l'une des soupapes magnétiques (36, 37), **caractérisé en ce qu'**au moins la soupape de trop-plein (18) d'un circuit, comportant la troisième surface active (33), présente une quatrième surface active (35) qui peut être commandée par une autre soupape magnétique (36) que celle associée à la troisième surface active (33), et **en ce que** la soupape active (36) associée à la troisième surface active (33) est conçue pour l'ouverture de la soupape de trop-plein (18) et la soupape magnétique (37), associée à la quatrième surface active (35), est conçue pour la fermeture de la soupape de trop-plein (18) du circuit.

2. Dispositif de distribution d'air comprimé selon la revendication 1, **caractérisé en ce que** la troisième surface active (33) est disposée sur une face de la paroi mobile (20) de la soupape de trop-plein (18) et la quatrième surface active (35) sur l'autre face de la paroi mobile (20) de la soupape de trop-plein (18), et **en ce que** les deux soupapes magnétiques (36, 37) associées à la troisième et à la quatrième surface active (33, 35) sont conçues fermées lorsqu'elles ne sont pas parcourues par un courant, ou ouvertes lorsqu'elles ne sont pas parcourues par un courant.

3. Dispositif de distribution d'air comprimé selon la revendication 1, **caractérisé en ce que** la troisième surface active (33) et la quatrième surface active (35) sont disposées sur la même face de la paroi mobile (20) de la soupape de trop-plein (18), et **en ce qu'**une soupape magnétique (36) est conçue fermée lorsqu'elle n'est pas parcourue par un courant et l'autre soupape magnétique (37) ouverte lorsqu'elle n'est pas parcourue par un courant.

4. Dispositif de distribution d'air comprimé selon une ou plusieurs des revendications 1 à 3, **caractérisé en ce que** la soupape magnétique (36) associée à la troisième surface active (33) et/ou la soupape magnétique (37) associée à la quatrième surface active (35) sont conçues pour commander au moins deux soupapes de trop-plein (18) de deux circuits.

5. Dispositif de distribution d'air comprimé selon la revendication 4, **caractérisé en ce que** la soupape magnétique (36) associée à la troisième surface active (33) et la soupape magnétique (37) associée à la quatrième surface active (35) sont conçues pour commander les deux circuits I et II.

6. Dispositif de distribution d'air comprimé selon une ou plusieurs des revendications 1 à 5, **caractérisé en ce que** la paroi mobile (20) de la soupape de trop-plein (18) à laquelle sont associées deux soupapes magnétiques (36, 37) pour la commande, est réalisée comme piston étagé (21).

7. Dispositif de distribution d'air comprimé selon la revendication 5, **caractérisé en ce qu'**outre les deux soupapes magnétiques (36, 37), qui sont associées à la ou aux troisièmes surfaces actives (33) et à la ou aux quatrièmes surfaces actives (35), il est prévu une troisième soupape magnétique (46) pour l'ouverture de la soupape de trop-plein (18) du circuit III, au-dessous de la pression d'ouverture réglée.

8. Dispositif de distribution d'air comprimé selon la revendication 7, **caractérisé en ce qu'**en aval d'une ou de plusieurs des soupapes de trop-plein (18) est couplé un limiteur de pression (47) qui comporte un piston (48) prenant appui dans le sens d'ouverture sur un ressort de limitation (49), et qui sur le côté tourné vers le ressort de limitation (49), présente une surface d'actionnement dont le compartiment d'actionnement (33) est raccordé, par une conduite de liaison (54), au compartiment actif de la troisième surface active (33) de la soupape de trop-plein (18).

9. Dispositif de distribution d'air comprimé selon une ou plusieurs des revendications 1 à 8, **caractérisé en ce que** la soupape magnétique (37), associée à la quatrième surface active (35), est conçue pour commander les soupapes de trop-plein (18) des circuits I à IV.
